# EUROPEAN PATENT APPLICATION

(11) **EP 2 106 042 A1**
(43) Date of publication of application: **30.09.2009**
(21) Application number: 09003779.7
(22) Date of filing: 16.03.2009
(51) Int. Cl.: H04B 10/158

(54) **Optical receiver**

(30) Priority: 25.03.2008 JP 2008077370
(71) Applicant: Yokogawa Electric Corporation, Tokyo 180-8750 (JP)
(72) Inventor: Asano, Tetsuri, Musashino-shi Tokyo 180-8750 (JP); Ogusu, Masahiro, Musashino-shi Tokyo 180-8750 (JP)
(74) Representative: Grünecker, Kinkeldey, Stockmair & Schwanhäusser Anwaltssozietät

(57) **Abstract**

An optical receiver in which a failure in a certain channel affects no other channels is provided. An optical receiver inputs DQPSK optical signals supplied from the outside into each of first and second delay interferometers and reproduces optical output from the first and second delay interferometers as binary non-return-to-zero (NRZ) signals of first and second channels by first and second An optical receiving elements. The delay time of the first and second delay interferometers is performed a feedback control by a control system independent for each of the first and second channels.

## Description

### BACKGROUND OF THE INVENTION

### Field of the Invention

The present invention relates to a receiver which receives phase-modulated optical signals.

### Description of Related Art

A conventional optical differential quadrature phase-shift keying (DQPSK) receiver is disclosed in Japanese Unexamined Patent Application, First Publication, No. 2007-20138 (JP 2007-20138A). The optical DQPSK receiver reproduces DQPSK signals as dual-channel binary non-return-to-zero (NRZ) signals (i.e., electrical signals). As shown in Fig. 1 of JP 2007-20138A, the disclosed DQPSK optical receiver is configured by two branches (i.e., I branch and Q branch) each provided with a Mach-Zehnder interferometer (i.e., a delay interferometer), a balanced optical detector, a data reproduction circuit and a phase control device. In the DQPSK optical receiver, each phase control device sets the delay time of the Mach-Zehnder interferometer of the I branch to π/4 as the phase of the DQPSK optical signal, and sets the delay time of the Mach-Zehnder interferometer of the Q branch as -π/4 as the phase of the DQPSK optical signal. In this manner, the DQPSK optical receiver converts the DQPSK optical signal that may form four phase angles (i.e., 0 degree (=2π), π/2, π and 3π/2) on a complex plane formed by real and imaginary axes, into binary NRZ signals (i.e., signals output from one of the channels) and reproduces the signals in the I branch and converts into binary NRZ signals (i.e., signals output from the other of the channels) and reproduces the signals in the Q branch.

In the DQPSK optical receiver, the delay time of the Mach-Zehnder interferometer of each branch is set in the above-described manner. The delay time of the Mach-Zehnder interferometer of a first branch is controlled by the signals obtained by multiplying and averaging the signals output from the balanced optical detector of the first branch and the signals output from a data reproduction circuit of a second branch. More particularly, the delay time of the Mach-Zehnder interferometer in the I branch is controlled based on the signals obtained by multiplying and averaging the signals output from the balanced optical detector in the I branch and the signals output from the data reproduction circuit in the Q branch. The delay time of the Mach-Zehnder interferometer in the Q branch is controlled based on the signals obtained by multiplying and averaging the signals output from the balanced optical detector in the Q branch and the signals output from the data reproduction circuit in the I branch.

An example of other receivers of the phase-modulated optical signals which incorporates the Mach-Zehnder interferometer is disclosed in R. A. Griffin et al., "Optical Differential Quadrature Phase-Shift Key (oDQPSK) for High Capacity Optical Transmission," Optical Fiber Communication Conference and Exhibit, 2002, OFC2002 17-22 March 2002, Pages 367 and 368 (hereinafter referred to as "Griffin et al.").

The above-described conventional DQPSK optical receiver suffers from the following disadvantage. The feedback control of the delay time for the Mach-Zehnder interferometer of the first branch (dual channel) is performed based on the signals output from the balanced optical detector of the first branch and the signals (binary NRZ signals) output from the data reproduction circuit of the second branch. If any failure occurs in the first branch, the failure may affect the second branch. More particularly, a failure in the first branch may make the second branch unreceivable.

In addition, since the feedback control of the delay time is performed based on the signals output from the balanced optical detector of the first branch and the signals output from the data reproduction circuit of the second branch, there is also a problem that a branch with a failure cannot be easily specified. This causes inconvenience in maintenance control of the DQPSK optical receiver.

Since the feedback control of the delay time is performed based on the signals output from the balanced optical detector of the first branch and the signals output from the data reproduction circuit of the second branch, there is also a problem that a desired receiving performance cannot be exhibited unless the constituent parts in both of the branches have consistent performance.

The invention has been made in view of the aforementioned circumstances. The objects of the invention are as follows:
(1) To provide an optical receiver in which a failure in a certain channel affects no other channels.
(2) To provide an optical receiver in which a channel with a failure can be specified easily.
(3) To provide an optical receiver with reduced adverse effects caused by inconsistent performance of constituent parts.

### SUMMARY OF THE INVENTION

To achieve the above objects, an optical receiver according to the present invention comprises a plurality of delay interferometers which receive a phase-modulated optical signal supplied from outside, and a plurality of photoelectric conversion elements which reproduce optical outputs from the delay interferometers as binary non-return-to-zero (NRZ) signals for a plurality of channels, wherein the delay time of each of the delay interferometers is controlled by a feedback control system independently provided for each of the channels.

In the optical receiver, the feedback control system for each of the channels may perform feedback control on the delay time based on optical receiving currents such that the optical receiving currents of the photoelectric conversion elements are mutually orthogonal.

The optical receiver may further comprise, in addition to the photoelectric conversion element, a controlling photoelectric conversion element for receiving an optical output from one of the delay interferometers, wherein the feedback control system may perform feedback control on the delay time based on an optical receiving current in the controlling photoelectric conversion element.

In the optical receiver, the feedback control system for each of the channels may include an autocorrelation detector circuit which detects autocorrelation of the binary NRZ signals, and the feedback control system may perform feedback control on the delay time such that the autocorrelation is the minimum.

In the optical receiver, the autocorrelation detector circuit may generate a multiplication signal by multiplying of a positive-phase signal and a negative-phase signal of the binary NRZ signal as a signal indicative of the autocorrelation.

According to the invention, the delay time in each delay interferometer is controlled by the feedback control system independent for each channel. Thus, in the optical receiver can be provided in which a failure in a certain channel affects no other channels, and a channel with a failure can be specified easily. Further, the optical receiver shows reduced adverse effects caused by inconsistent performance of constituent parts.

### BRIEF DESCRIPTION OF THE DRAWINGS

Fig. 1 is a block diagram showing an optical receiver according to a first embodiment of the invention.
Fig. 2 is a graph showing characteristics of delay control of first and second delay interferometers according to embodiments of the invention.
Fig. 3 is a block diagram showing an optical receiver according to a second embodiment of the invention.
Fig. 4 is a block diagram showing an optical receiver according to a third embodiment of the invention.
Fig. 5 is a block diagram showing an optical receiver according to a fourth embodiment of the invention.
Fig. 6 is a block diagram showing an optical receiver according to a fifth embodiment of the invention.

### DESCRIPTION OF THE PREFERRED EMBODIMENTS

Referring now to the drawings, embodiments of the present invention will be described.

### First Embodiment

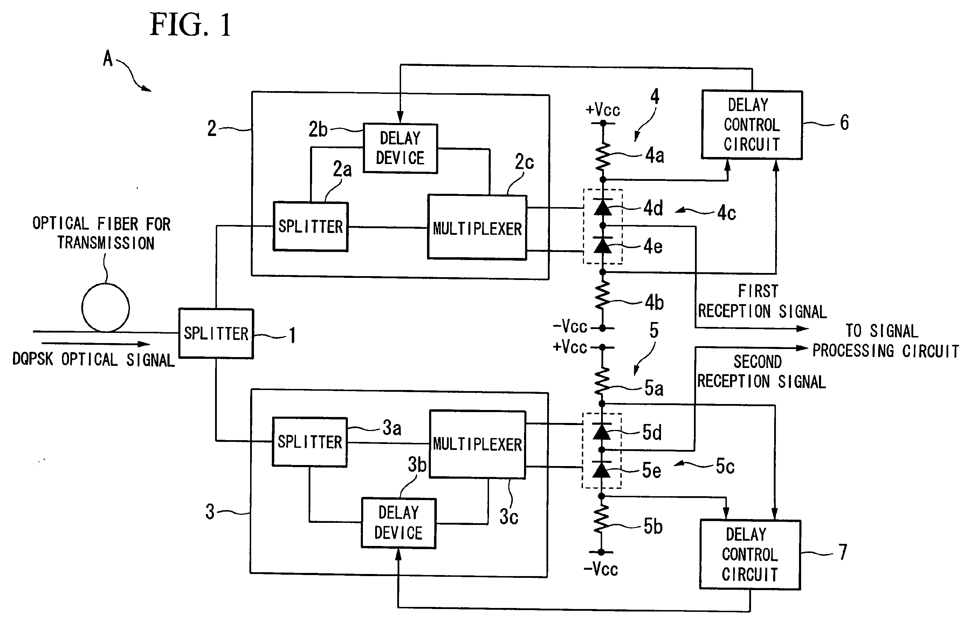

Fig. 1 is a block diagram showing a configuration of an optical receiver A according to a first embodiment of the present invention. The optical receiver A receives differential quadrature phase-shift keying (DQPSK) signals input from an unillustrated optical transmitter via an optical fiber for transmission, and converts the DQPSK signals into electrical signals (i.e., first and second reception signals). As illustrated in Fig. 1, the optical receiver A is configured by a splitter 1, first and second delay interferometers 2 and 3, first and second optical receiving elements 4 and 5, and first and second delay control circuits 6 and 7. The first optical receiving element 4 and the first delay control circuit 6 constitute a control system of a first channel. The second optical receiving element 5 and the second delay control circuit 7 constitute a control system of a second channel.

The splitter 1 is an optical coupler which splits the DQPSK optical signals in two branches and supplies the split signals to the first and second channels. More particularly, the optical output from the splitter 1 is input into the first and second delay interferometers 2 and 3.

The first delay interferometer 2 is configured by a splitter 2a, a delay device 2b and a multiplexer 2c. The first delay interferometer 2 converts two-phase components on the real axis in the DQPSK optical signals input from the splitter 1 into intensity-modulated signals and outputs the intensity-modulated signals to the first optical receiving element 4. More particularly, the splitter 2a splits the DQPSK optical signals input from the splitter 1 in two branches, outputs one of the split signals to the delay device 2b and outputs the other of the split signals to the multiplexer 2c. The delay device 2b delays the DQPSK optical signals input from the splitter 2a by a predetermined delay time and outputs the delayed signals to the multiplexer 2c. The multiplexer 2c multiplexes the DQPSK optical signals input from the splitter 2a and the DQPSK optical signals input from the delay device 2b that are delayed by one unit time and converts the multiplexed signals into a pair of optical intensity-modulated signals. The multiplexer 2c then outputs the converted signals to the first optical receiving element 4.

The second delay interferometer 3 is configured by a splitter 3a, a delay device 3b and a multiplexer 3c. The second delay interferometer 3 converts two-phase components on an imaginary axis in the DQPSK optical signals input from the splitter 1 into intensity-modulated signals and outputs the intensity-modulated signals to the second optical receiving element 5. More particularly, in the second delay interferometer 3, the splitter 3 a splits the DQPSK optical signals input from the splitter 1 in two branches, outputs one of the split signals to the delay device 3b and outputs the other of the split signals to the multiplexer 3c. The delay device 3b delays the DQPSK optical signals input from the splitter 3a by a predetermined delay time and outputs the delayed signals to the multiplexer 3c. The multiplexer 3c multiplexes the DQPSK optical signals input from the splitter 3a and the delayed DQPSK optical signals input from the delay device 3b and converts the signals into a pair of optical intensity-modulated signals. The multiplexer 3c then outputs the converted signals to the second optical receiving element 5.

In this manner, the first delay interferometer 2 converts the two-phase components on the real axis in the DQPSK optical signals into the intensity-modulated signals and the second delay interferometer 3 converts the two-phase components on the imaginary axis in the DQPSK optical signals into the intensity-modulated signals. More particularly, the first delay interferometer 2 and the second delay interferometer 3 each converts one of the two phase components having 90-degree different phases into the intensity-modulated signals. As described in the aforementioned JP 2007-20138A and Griffin et al., since the principle of operation of the first and second delay interferometers 2 and 3 is well known as a process of receiving DQPSK optical signals, description thereof will be omitted.

As illustrated in Fig. 1, the first optical receiving element 4 is configured by first and second resistors 4a and 4b and a balanced photodiode (PD) 4c. The first optical receiving element 4 differential-detects a pair of optical intensity-modulated signals input from the first delay interferometer 2 and converts the signals into binary NRZ signals (i.e., first reception signals) of the first channel. The first optical receiving element 4 is configured by a first resistor 4a, a balanced PD 4c and a second resistor 4b connected in series in this order between a positive power supply (+Vcc) and a negative power supply (-Vcc). The first resistor 4a is connected to a cathode terminal (at the side of the positive power supply) of the balanced PD 4c and the second resistor 4b is connected to an anode terminal (at the side of the negative power supply) of the balanced PD 4c.

The balanced PD 4c is configured by two photodiodes with similar characteristics, i.e., first and second PDs 4d and 4e, connected in series. Connection points of the first and second PDs 4d and 4e serve as output terminals. The first resistor 4a is a current detecting resistor which provides the bias current at the side of the positive power supply of the balanced PD 4c and detects the optical receiving current (i.e., the positive optical receiving current I41) which flows from the positive power supply (+Vcc) into the balanced PD 4c as the cathode voltage of the first PD 4d. The second resistor 4b provides the bias current at the side of the negative power supply of the balanced PD 4c and detects the optical receiving current (i.e., the negative optical receiving current I42) which flows from the balanced PD 4c into the negative power supply (-Vcc) as the anode voltage of the second PD 4e.

The first optical receiving element 4 outputs the first reception signals to a subsequent signal processing circuit, and also outputs the cathode voltage of the first PD 4d and the anode voltage of the second PD 4e to the first delay control circuit 6.

As illustrated in Fig. 1, the second optical receiving element 5 is configured by first and second resistors 5a and 5b and a balanced PD 5c. The second optical receiving element 5 detects difference in a pair of optical intensity-modulated signals input from the second delay interferometer 3 and converts the signals into binary NRZ signals (i.e., second reception signals) of the second channel. The second optical receiving element 5 is configured by a first resistor 5a, a balanced PD 5c and a second resistor 5b connected in series in this order between a positive power supply and a negative power supply. The first resistor 5a is connected to a cathode terminal (at the side of the positive power supply) of the balanced PD 5c and the second resistor 5b is connected to an anode terminal (at the side of the negative power supply) of the balanced PD 5c.

The balanced PD 5c is identical to the balanced PD 4c and is configured by two photodiodes with similar characteristics, i.e., first and second PDs 5d and 5e, connected in series. Connection points of the first and second PDs 5d and 5e serve as output terminals. The first resistor 5a is identical to the first resistor 4a and is a current detecting resistor which provides the bias current at the side of the positive power supply of the balanced PD 5c and detects the optical receiving current (i.e., the positive optical receiving current I51) which flows from the positive power supply (+Vcc) into the balanced PD 5c as the cathode voltage of the first PD 5d. The second resistor 5b provides the bias current at the side of negative power supply of the balanced PD 5c and detects the optical receiving current (i.e., the negative optical receiving current I52) which flows from the balanced PD 5c into the negative power supply (-Vcc) as the anode voltage of the second PD 5e.

The second optical receiving element 5 outputs the second reception signal to a subsequent signal processing circuit, and also outputs the cathode voltage of the first PD 5d and the anode voltage of the second PD 5e to the second delay control circuit 7.

The first delay control circuit 6 performs feedback control on the delay time of the delay device 2b based on the positive optical receiving current I41 indicated by the cathode voltage of first PD 4d and the negative optical receiving current I42 indicated by the anode voltage of the second PD 4e. The second delay control circuit 7 performs feedback control on the delay time of the delay device 3b based on the positive optical receiving current I51 indicated by the cathode voltage of the first PD 5d and the negative optical receiving current I52 indicated by the anode voltage of the second PD 5e. Details of the control processing of the first and second delay control circuits 6 and 7 will be described later in relation to the operation of the optical receiver A.

As described above, the optical receiver A is configured such that the delay time in the first and second delay interferometers 2 and 3 is performed a feedback control by the control system independent for each channel.

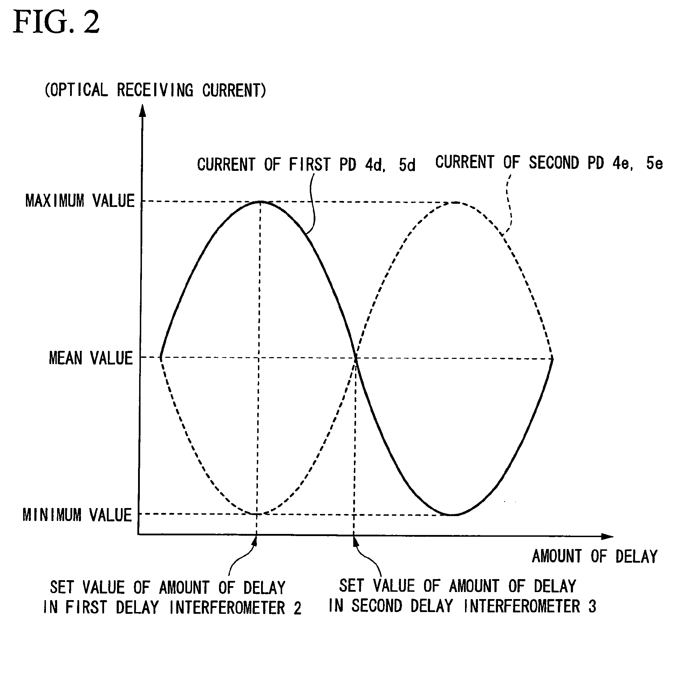

Next, the operation of the thus-configured optical receiver A will be described in detail with reference to Fig. 2.

The DQPSK optical signals are split by the splitter 1 and then input to the first and second delay interferometers 2 and 3. The two-phase components on the real axis of the DQPSK optical signals are converted into the intensity-modulated signals by the first delay interferometer 2. The intensity-modulated signals are converted into the first reception signals (i.e., binary NRZ signals) by the first optical receiving element 4. The two-phase components on the imaginary axis of the DQPSK optical signals are converted by the second delay interferometer 3 into the intensity-modulated signals. The intensity-modulated signals are converted into the second reception signals (i.e., the binary NRZ signals) by the second optical receiving element 5. The basic operation of the optical receiver A is similar to that of the receiver disclosed in the aforementioned JP 2007-20138A. In the optical receiver A, however, the delay device 2b of the first delay interferometer 2 is controlled by the first delay control circuit 6 by the use of the feedback control system and the delay device 3b of the second delay interferometer 3 is controlled by the second delay control circuit 7 by the use of the feedback control system.

More particularly, the first delay control circuit 6 determines the delay time of the delay device 2b by the feedback control such that the positive optical receiving current I41 indicated by the cathode voltage of the first PD 4d and the positive optical receiving current I41 indicated by the anode voltage of the second PD 4e take the maximum values (i.e., the negative optical receiving current I42 takes the minimum value). The second delay control circuit 7 determines the delay time of the delay device 3b by the feedback control such that the positive optical receiving current I51 indicated by the cathode voltage of the first PD 5d takes a mean value of the maximum value and the minimum value (i.e., the negative optical receiving current I52 takes a mean value of the maximum value and the minimum value).

Since the delay time of each of the delay devices 2b and 3b is controlled in the above-described manner, the first delay interferometer 2 converts the two-phase components on the real axis of the DQPSK optical signals into the intensity-modulated signals and the second delay interferometer 3 converts the two-phase components on the imaginary axis, which is the phase axis perpendicular to the real axis, of the DQPSK optical signals.

Fig. 2 is a characteristic chart which shows the change in the positive optical receiving currents I41 and I51 of the first and second channels and the negative optical receiving currents I42 and I52 depending on the amount of delay time of the delay device 2b. For the periodically-changing positive and negative optical receiving currents I41 and I42 as shown in Fig. 2, the first delay control circuit 6 of the first channel detects the maximum value of the positive optical receiving current I41 (i.e., the minimum value of the negative optical receiving current I42) and then performs a feedback control on the delay time of the delay device 2b such that the positive optical receiving current I41 takes the maximum value (i.e., the minimum value of the negative optical receiving current I42).

The second delay control circuit 7 detects the mean value of the maximum value and the minimum value of the positive optical receiving current I51 (i.e., the mean value of the maximum value and the minimum value of the negative optical receiving current I52), which corresponds to the optical receiving current having a phase difference of 90 degrees with respect to the maximum value of the positive optical receiving current I41 of the first channel (i.e., the minimum value of the negative optical receiving current I42), and then performs a feedback control on the delay time of the delay device 3b such that the positive optical receiving current I51 takes the mean value.

Since the real axis and the imaginary axis of the DQPSK optical signal are perpendicular to each other, each phase component (of the four phase components) of the DQPSK optical signals can be detected even if the first delay control circuit 6 controls the delay time of the delay device 2b such that the positive optical receiving current I41 takes the mean value of the maximum value and the minimum value (i.e., the mean value of the maximum value and the minimum value of the negative optical receiving current I42) and the second delay control circuit 7 controls the delay time of the delay device 3b such that the positive optical receiving current I51 takes the maximum value (i.e., the minimum value of the negative optical receiving current I52).

According to the optical receiver A, since the control systems of the first and second delay interferometers 2 and 3 are independent for each channel, a failure in one of the channels has no adverse effect on the other channels. For example, even if a failure occurs in a constituent part of the first channel, the failure has no adverse effect on the second channel. Therefore, a failure in the first channel causing abnormality, e.g., unreceivability, can be prevented in the second branch and vice versa.

According to the optical receiver A, since the control systems of the first and second delay interferometers 2 and 3 are independent for each channel, a channel with a failure can be specified easily. In addition, adverse effects caused by inconsistent performance of the constituent parts can be reduced.

### Second Embodiment

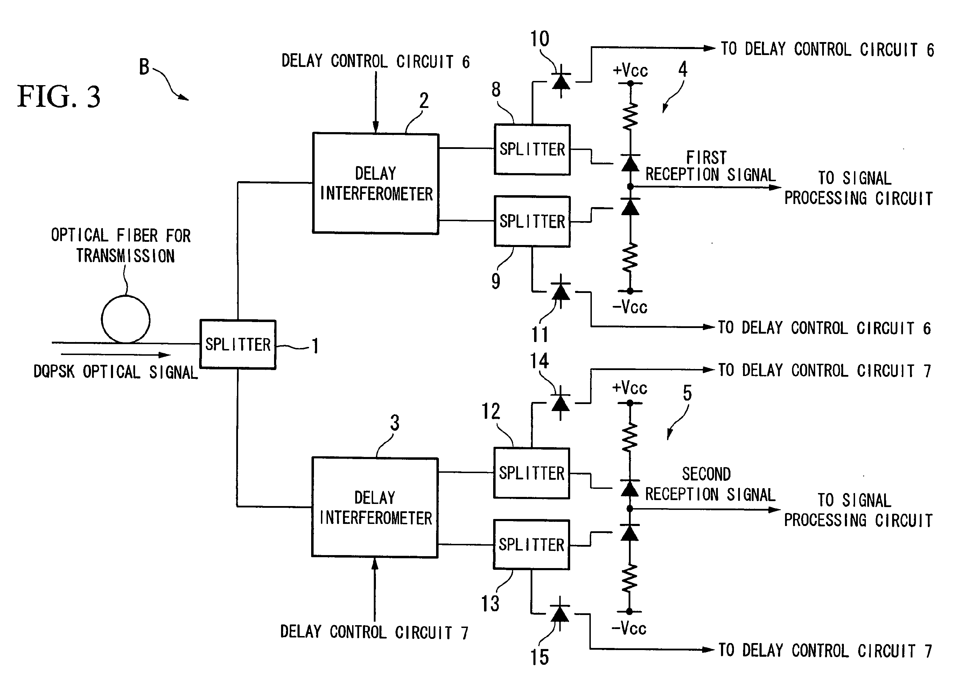

Fig. 3 is a block diagram showing a configuration of an optical receiver B according to the second embodiment. In Fig. 3, constituent parts similar to those of the optical receiver A according to the first embodiment shown in Fig. 1 will be denoted by similar reference numerals.

The optical receiver B includes splitters 8, 9, 12 and 13 and photodiodes 10, 11, 14 and 15 in addition to the constituent parts of the optical receiver A according to the first embodiment. In this configuration, the positive optical receiving currents I41 and I51 and the negative optical receiving currents I42 and I52 are obtained not from the first and second optical receiving elements 4 and 5 but from the dedicated photodiodes 10, 11, 14 and 15. In the optical receiver B, a control system of the first channel is configured by the photodiodes 10 and 11 and the first delay control circuit 6, and a control system of the second channel is configured by the photodiodes 14 and 15 and the second delay control circuit 7.

More particularly, the splitter 8, provided between the first delay interferometer 2 and the first optical receiving element 4, splits one of the optical intensity-modulated signals input from the first delay interferometer 2 into two branches and outputs the split signals to the first optical receiving element 4 and the photodiode 10. The splitter 9, provided between the first delay interferometer 2 and the first optical receiving element 4, splits the other of the optical intensity-modulated signals input from the first delay interferometer 2 into two branches and outputs the split signals to the first optical receiving element 4 and the photodiode 11. The splitter 12, provided between the second delay interferometer 3 and the second optical receiving element 5, splits one of the optical intensity-modulated signals input from the second delay interferometer 3 into two branches and outputs the split signals to the second optical receiving element 5 and the photodiode 14. The splitter 13, provided between the second delay interferometer 3 and the second optical receiving element 5, splits the other of the optical intensity-modulated signals input from the second delay interferometer 3 into two branches and outputs the split signals to the second optical receiving element 5 and the photodiode 15.

The photodiode 10 performs photoelectric conversion of one of the optical intensity-modulated signals input from the splitter 8 and outputs electrical signals corresponding to the positive optical receiving current I41 to the first delay control circuit 6. The photodiode 11 performs photoelectric conversion of the other of the optical intensity-modulated signals input from the splitter 9 and outputs electrical signals corresponding to the negative optical receiving current I42 to the first delay control circuit 6. The photodiode 14 performs photoelectric conversion of one of the optical intensity-modulated signals input from the splitter 12 and outputs the electrical signals corresponding to the positive optical receiving current I51 to the second delay control circuit 7. The photodiode 15 performs photoelectric conversion of the other of the optical intensity-modulated signals input from the splitter 13 and outputs electrical signals corresponding to the negative optical receiving current I52 to the second delay control circuit 7.

The first delay control circuit 6 of the optical receiver B controls the first delay interferometer by a feedback control system in a manner similar to that of the first embodiment based on the electrical signals corresponding to the positive optical receiving current I41 input from the photodiode 10 and the electrical signals corresponding to the negative optical receiving current I42 input from the photodiode 11. The second delay control circuit 7 controls the second delay interferometer by a feedback control system in the same manner as in the first embodiment based on the electrical signals corresponding to the positive optical receiving current I51 input from the photodiode 14 and the electrical signals corresponding to the negative optical receiving current I52 input from the photodiode 15.

According to the optical receiver B, since the delay device 2b of the first delay interferometer 2 is controlled by the first delay control circuit 6 by the use of the feedback control system and the delay device 3b of the second delay interferometer 3 is controlled by the second delay control circuit 7 by the use of the feedback control system, the conventional problems can be solved as in the optical receiver A according to the first embodiment.

### Third Embodiment

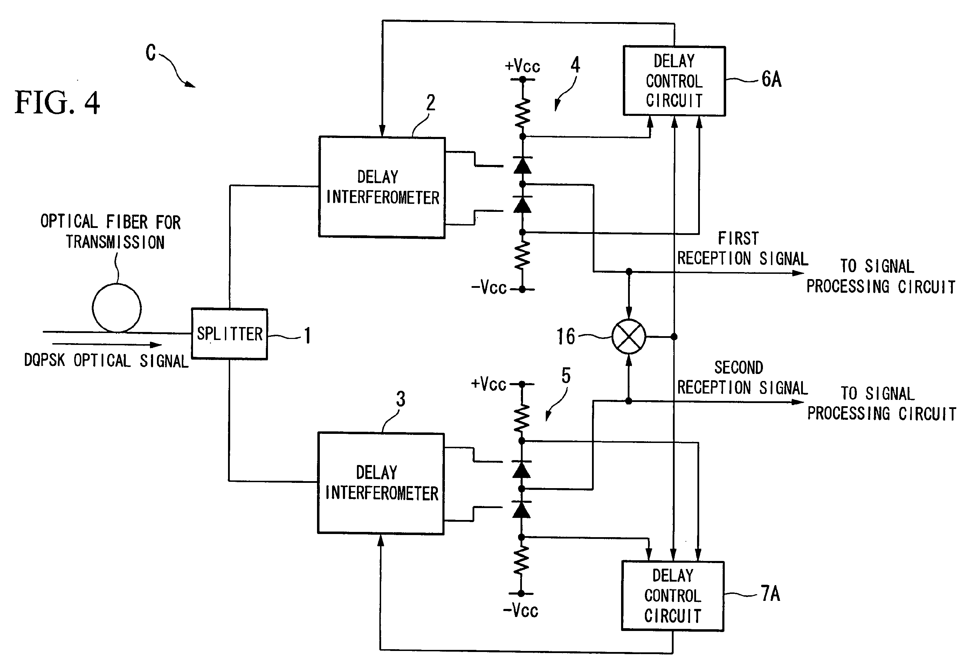

Fig. 4 is a block diagram showing a configuration of an optical receiver C according to the third embodiment. In Fig. 4, constituent parts similar to those of the optical receiver A according to the first embodiment shown in Fig. 1 will be denoted by similar reference numerals.

The optical receiver C includes, in addition to the constituent parts of the optical receiver A according to the first embodiment, a multiplier 16 and first and second delay control circuits 6A and 7A which perform the feedback control on the first and second delay interferometers 2 and 3 in consideration of the output of the multiplier 16. In the optical receiver C, a control system of the first channel is configured by the first optical receiving element 4 and the first delay control circuit 6A and a control system of the second channel is configured by the second optical receiving element 5 and the second delay control circuit 7A. Functionalities of the multiplier 16 and the first and second delay control circuits 6A and 7A based on the output from the multiplier 16 altogether constitute an auxiliary control system common to the first and second channels.

The multiplier 16 multiplies the first reception signals and the second reception signals and outputs the result to the first and second delay control circuits 6A and 7A. The first and second delay control circuits 6A and 7A determine whether a failure has occurred in the optical receiving performance based on the multiplication value of the multiplier 16, and in consideration of the result of the determination, perform the feedback control on the delay time of the first and second delay interferometers 2 and 3.

When the first and second delay interferometers 2 and 3 are in normal operation, they convert the phase components on different phase axes into the optical intensity-modulated signals. Thus, the first reception signals and the second reception signals are different from each other. When a failure occurs in the first and second delay interferometers 2 and 3, e.g., when the phase components on the same phase axis are wrongly converted into the optical intensity-modulated signals, the first reception signals and the second reception signals are highly correlated.

Accordingly, the signals output from the multiplier 16 indicating the multiplication result of the first reception signals and the second reception signals significantly differ when the first and second delay interferometers 2 and 3 are in normal operation and when the first and second delay interferometers 2 and 3 are not in normal operation. The first and second delay control circuits 6A and 7A determine whether a failure has occurred in the first and the second delay interferometers 2 and 3 based on the multiplication value of the multiplier 16. When a failure is found, it will be eliminated by shifting the delay time of the first and second delay interferometers 2 and 3 within one unit time (i.e., one bit rate of the DQPSK optical signal).

If the delay times of both of the first and second delay interferometers 2 and 3 are shifted by one unit time, the failure is not eliminated. The delay time of either of the first and second delay interferometers 2 and 3, e.g., the one which can be easily controlled to shift the delay time, is shifted within one unit time.

According to the optical receiver C, since the first delay interferometer 2 is controlled by the first delay control circuit 6A by the use of the feedback control system and the second delay interferometer 3 is controlled by the second delay control circuit 7A by the use of the feedback control system, the conventional problems can be solved as in the optical receiver A according to the first embodiment and the optical receiver B according to the second embodiment.

Although in the optical receiver C the first and second reception signals are directly input in the multiplier 16 for multiplication, the first and second reception signals may alternatively be input to the multiplier 16 as band-limited signals. For example, only low-frequency components of the first and second reception signals may be input to the multiplier 16 through a low pass filter. In this case, it is unnecessary to provide a multiplier 16 with excellent high-frequency characteristic, which can lower the cost.

### Fourth Embodiment

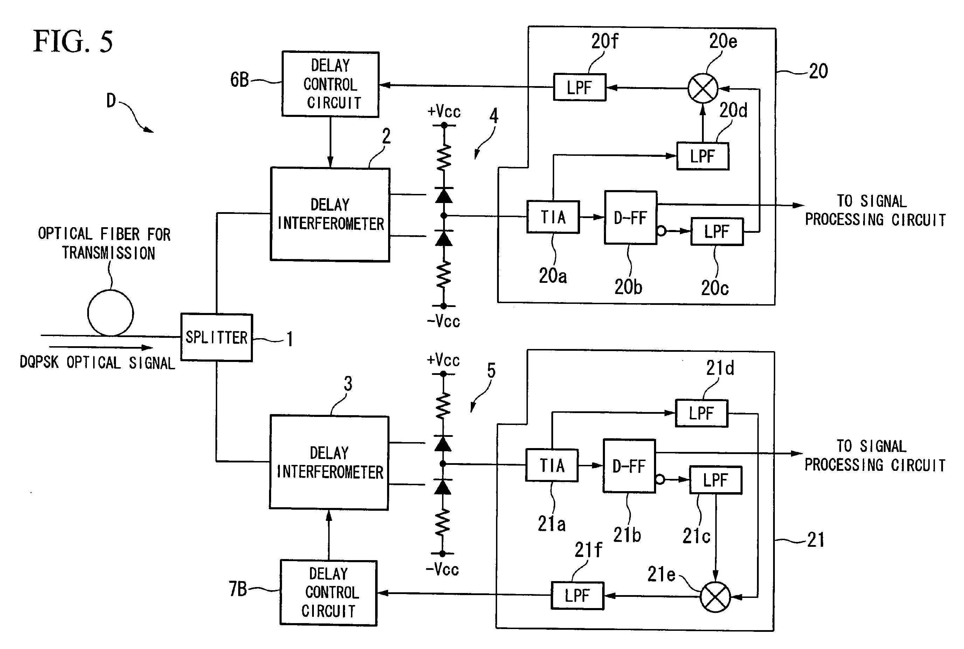

Fig. 5 is a block diagram showing a configuration of an optical receiver D according to the fourth embodiment. In Fig. 5, constituent parts similar to those of the optical receiver A according to the first embodiment shown in Fig. 1 will be denoted by similar reference numerals.

The optical receiver D includes a first autocorrelation detector circuit 20 for detecting autocorrelation of the first reception signals, a second autocorrelation detector circuit 21 for detecting autocorrelation of the second reception signals, a first delay control circuit 6B for performing a feedback control on the first delay interferometer 2 based on the output of the first autocorrelation detector circuit 20, and a second delay control circuit 7B for performing feedback control on the second delay interferometer 3 based on the output of the second autocorrelation detector circuit 21.

In the optical receiver D, a control system of a first channel is configured by the first autocorrelation detector circuit 20 and the first delay control circuit 6B, and a control system of a second channel is configured by the second autocorrelation detector circuit 21 and the second delay control circuit 7B.

The first autocorrelation detector circuit 20 is configured by a trans impedance amplifier (TIA) 20a, a D flip-flop (D-FF) circuit 20b, LPFs 20c, 20d and 20f, and a multiplier 20e. The TIA 20a amplifies the voltage of the first reception signals input from the first optical receiving element 4 and outputs the amplified voltage to the D-FF circuit 20b and the LPF 20d. The D-FF circuit 20b converts the first reception signals input from the TIA 20a into positive-phase and negative-phase first digital signals, outputs the positive-phase first digital signals to the subsequent signal processing circuit and outputs the negative-phase first digital signals to the LPF 20c.

The LPF 20c extracts only the fundamental wave component of the negative-phase first digital signals and outputs the component to the multiplier 20e. The LPF 20d extracts only the fundamental wave component of the first reception signals input from the TIA 20a and outputs the component to the multiplier 20e. The multiplier 20e multiplies the fundamental wave component of the first reception signals and the fundamental wave component of the negative-phase first digital signals. The multiplier 20e then outputs first autocorrelation signals indicating an autocorrelation coefficient of the fundamental wave components to the LPF 20f. The LPF 20f extracts a component of low frequency in the first autocorrelation signals and outputs the component to the first delay control circuit 6B.

The thus-configured first autocorrelation detector circuit 20 detects the correlation of the positive-phase component and the negative-phase component of the first reception signals, i.e., the autocorrelation coefficient of the first reception signals. When the delay time of the delay device 2b is set to one unit time of the DQPSK optical signal with high precision, the first delay interferometer 2 selectively converts only the phase component on the real axis of the DQPSK optical signals into the optical intensity-modulated signals. Thus, the autocorrelation coefficient indicated by the first autocorrelation signals takes the minimum value. When the delay time of the delay device 2b is more or less than one unit time, the optical intensity-modulated signals also include the phase component on the imaginary axis of the DQPSK optical signal. Thus, the value of the autocorrelation coefficient becomes greater than the minimum value. The first delay control circuit 6B performs a feedback control on the delay time of the delay device 2b such that the autocorrelation coefficient indicated by the first autocorrelation signals takes the minimum value based on the characteristic of the autocorrelation coefficient. More particularly, it suffices that the delay control circuit is configured such that the differential coefficient of the autocorrelation coefficient based on the delay time of the delay device takes the minimum value.

The second autocorrelation detector circuit 21 is configured by a trans impedance amplifier (TIA) 21 a, a D flip-flop (D-FF) circuit 21b, LPFs 21 c, 2 1 d and 2 1 f, and a multiplier 21e. The TIA 21 a amplifies the voltage of the second reception signals input from the second optical receiving element 5 and outputs the amplified voltage to the D-FF circuit 21 b and the LPF 21d. The D-FF circuit 21b converts the second reception signals input from the TIA 21a into positive-phase and negative-phase second digital signals, outputs the positive-phase second digital signals to the subsequent signal processing circuit and outputs the negative-phase second digital signals to the LPF 21c.

The LPF 21 c extracts only the fundamental wave component of the negative-phase second digital signals and outputs the component to the multiplier 21e. The LPF 21d extracts only the fundamental wave component of the second reception signals input from the TIA 21 a and outputs the component to the multiplier 21e. The multiplier 21e multiplies the fundamental wave component of the second reception signals and the fundamental wave component of the negative-phase second digital signal and outputs the second autocorrelation signals indicating the autocorrelation coefficient of the fundamental wave components to the LPF 21f. The LPF 21 f extracts a component of low frequency in the second autocorrelation signals and outputs the component to the second delay control circuit 7B.

The thus-configured second autocorrelation detector circuit 21 functions in the same manner as that of the first autocorrelation detector circuit 20. The second autocorrelation detector circuit 21 detects the correlation of the positive-phase component and the negative-phase component of the second reception signals, i.e., the autocorrelation coefficient of the second reception signals. When the delay time of the delay device 3b is set to one unit time of the DQPSK optical signal with high precision, the second delay interferometer 3 selectively converts only the phase component on the real axis of the DQPSK optical signals into the optical intensity-modulated signals. Thus, the autocorrelation coefficient indicated by the second autocorrelation signals takes the minimum value. When the delay time of the delay device 3b is more or less than one unit time, the optical intensity-modulated signals also include the phase component on the imaginary axis of the DQPSK optical signal. Thus, the value of the autocorrelation coefficient becomes greater than the minimum value. The second delay control circuit 7B performs feedback control on the delay time of the delay device 3b such that the autocorrelation coefficient indicated by the second autocorrelation signals takes the minimum value based on the characteristic of the autocorrelation coefficient.

According to the thus-configured optical receiver D, since the first delay interferometer 2 is controlled by the first delay control circuit 6B by the use of the feedback control system and the second delay interferometer 3 is controlled by the second delay control circuit 7B by the use of the feedback control system, the conventional problems can be solved as in the optical receivers A to C.

Although in the optical receiver D, the D-FF circuits 20b and 21 b are used as the means for generating the positive-phase and negative-phase signals of the first and second reception signals, other digital circuits may alternatively be used for outputting the positive-phase and negative-phase signals. For example, a data buffer may be used as the digital circuit. Instead of digital circuits such as the D-FF circuits 20b, 21 b and the data buffer, an analog circuit such as a differential amplifier may be used.

### Fifth Embodiment

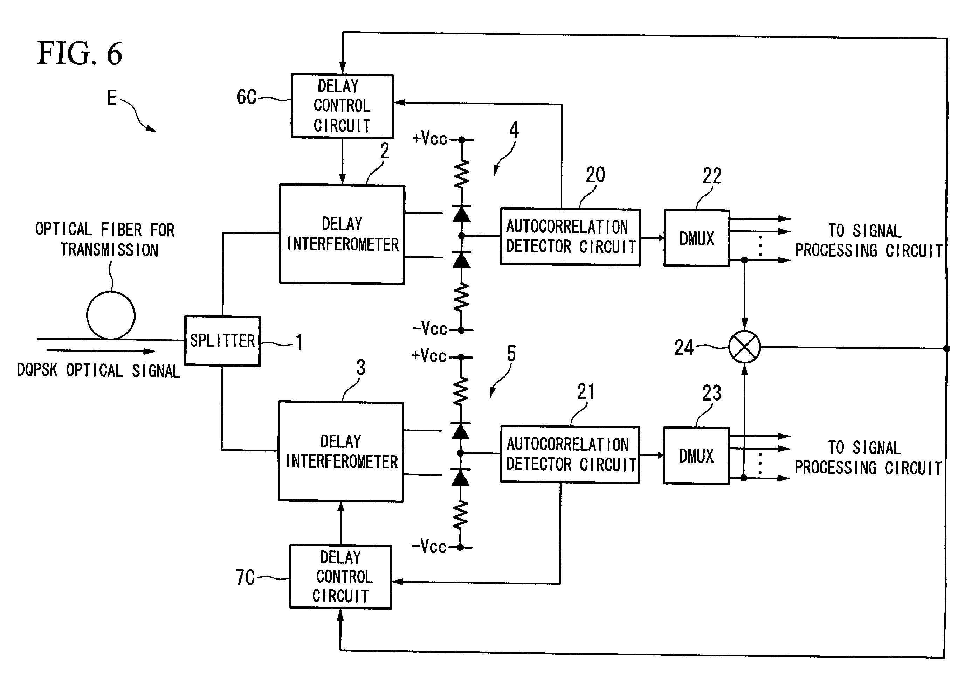

Fig. 6 is a block diagram showing a configuration of an optical receiver E according to the fifth embodiment. In Fig. 6, constituent parts similar to those of the optical receivers A and D according to the first and fifth embodiments shown in Figs. 1 and 5 will be denoted by similar reference numerals.

The optical receiver E includes first and second digital multiplexers (DMUXs) 22 and 23 and a multiplier 24 in addition to the constituent parts of the optical receiver D according to the fourth embodiment. Thus, the optical receiver E functions in the same manner as the optical receiver C according to the third embodiment. More particularly, the optical receiver E eliminates a failure, e.g., a wrong conversion of the phase components on the same phase axis into the optical intensity-modulated signals by the first and second delay interferometers 2 and 3.

In the optical receiver E, a control system of a first channel is configured by a first autocorrelation detector circuit 20 and a first delay control circuit 6C. A control system of a second channel is configured by a second autocorrelation detector circuit 21 and a second delay control circuit 7C. Functionalities of first and second DMUXs 22 and 23, the multiplier 24 and the first and second delay control circuits 6C and 7C based on the output from the multiplier 24 altogether constitute an auxiliary control system common to the first and second channels.

The first DMUX 22 divides the positive-phase first digital signals input from the D-FF circuit 20b for each port number and outputs the divided signals. The second DMUX 23 divides the positive-phase second digital signals input from the D-FF circuit 21 b for each port number and outputs the divided signals. The multiplier 24 multiplies the digital signals of the same port number output from the first and second DMUXs 22 and 23 and outputs multiplication signals indicating the cross-correlation coefficient of the first and second DMUXs 22 and 23 to the first and second delay control circuits 6C and 7C.

When the first and second delay interferometers 2 and 3 normally convert the phase component on the real axis and the phase component on the imaginary axis into the optical intensity-modulated signals, correlativity of these phase components is low and the value of the cross-correlation coefficient is small. However, if a failure occurs, e.g., if the first and second delay interferometers 2 and 3 wrongly convert the phase components on the same phase axis into the optical intensity-modulated signals, the value of the cross-correlation coefficient becomes greater.

The first and second delay control circuits 6C and 7C determine whether a failure has occurred in the operation of the first and the second delay interferometers 2 and 3 based on the cross-correlation coefficient indicated by the multiplication signals of the multiplier 24. When a failure is found, it will be eliminated by shifting the delay time of the first and second delay interferometers 2 and 3 within one unit time (i.e., one bit rate of the DQPSK optical signal). In the context of an optical phase, a failure is eliminated by shifting the optical phase by 90 to 270 degrees.

According to the thus-configured optical receiver E, since the first delay interferometer 2 is controlled by the first delay control circuit 6C by the use of the feedback control system and the second delay interferometer 3 is controlled by the second delay control circuit 7C by the use of the feedback control system, the conventional problems can be solved as in the optical receivers A to D. Further, the optical receiver E rapidly eliminates a failure, e.g., a wrong conversion of the phase components on the same phase axis into the optical intensity-modulated signals by the first and second delay interferometers 2 and 3.

As a modified embodiment of the optical receiver E, instead of the digital signals of the same port numbers output from the first and second DMUXs 22 and 23, the optical receiving currents of the first and second optical receiving elements 4 and 5 in the optical receivers A and C according to the first and third embodiments may be input to the first and second delay control circuits 6C and 7C. Thus, a failure of wrong conversion of the phase components on the same phase axis into the optical intensity-modulated signals by the first and second delay interferometers 2 and 3 based on the cross-correlation coefficient of the optical receiving currents of the first and second optical receiving elements 4 and 5 may be avoided.

Although the illustrative embodiments of the invention have been described, the invention is not limited thereto. For example, the following modifications may be made to the invention.
(1) While the embodiments have been described in relation to the optical receivers which receive DQPSK optical signals, the invention is not limited thereto. The invention may also be applied to optical receivers which receive phase-modulated optical signals other than the DQPSK optical signals.
(2) The configurations of the first and second autocorrelation detector circuits 20 and 21 of the fourth and fifth embodiments are examples of circuit configurations for detecting the autocorrelation of the first and second reception signals. Various circuits are known for obtaining the autocorrelation of the signals and these known circuits may alternatively be used for detecting the autocorrelation of the first and second reception signals.

## Claims

1. An optical receiver comprising a plurality of delay interferometers which receive a phase-modulated optical signal supplied from outside, and a plurality of photoelectric conversion elements which reproduce optical outputs from the delay interferometers as binary non-return-to-zero (NRZ) signals for a plurality of channels, wherein a delay time of each of the delay interferometers is controlled by a feedback control system independently provided for each of the channels.

2. An optical receiver according to claim 1, wherein the feedback control system for each of the channels performs feedback control on the delay time based on optical receiving currents such that the optical receiving currents of the photoelectric conversion elements are mutually orthogonal.

3. An optical receiver according to claim 2, further comprising, in addition to the photoelectric conversion element, a controlling photoelectric conversion element for receiving an optical output from one of the delay interferometers, wherein the feedback control system performs feedback control on the delay time based on an optical receiving current in the controlling photoelectric conversion element.

4. An optical receiver according to claim 1, wherein the feedback control system for each of the channels includes an autocorrelation detector circuit which detects autocorrelation of the binary NRZ signals, and the feedback control system performs feedback control on the delay time such that the autocorrelation is a minimum.

5. An optical receiver according to claim 4, wherein the autocorrelation detector circuit generates a multiplication signal by multiplying a positive-phase signal and a negative-phase signal of the binary NRZ signal as a signal indicative of the autocorrelation.
